# EUROPEAN PATENT APPLICATION

(11) **EP 4 518 481 A1**
(43) Date of publication of application: **05.03.2025**
(21) Application number: 22939403.6
(22) Date of filing: 29.04.2022
(51) Int. Cl.: H04W 72/04, H04B 7/02

(54) **INFORMATION PROCESSING METHOD AND APPARATUS, AND TERMINAL, BASE STATION AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/090764
(87) International publication number: WO 2023/206559

(57) **Abstract**

Provided in the embodiments of the present disclosure are an information processing method and apparatus, and a terminal, a base station and a storage medium. The information processing method is applied to a base station and comprises: sending network signaling to a terminal, wherein the network signaling comprises beam indication information that is configured for a physical uplink control channel (PUCCH) resource indicated by a PUCCH resource indicator (PRI) domain; and the beam indication information comprises a plurality of transmission configuration indicators (TCIs), and the beam indication information is used for the terminal to perform joint PUCCH transmission on the basis of a space division multiplexing (SDM) mode based on multiple antenna panels or multiple transmission reception points (TRPs).

## Description

### TECHNICAL FIELD

The present disclosure relates to the field of wireless communication technologies but is not limited to the field of wireless communication technologies, and particularly relates to a method and an apparatus for processing information, a terminal, a base station and a storage medium.

### BACKGROUND

The present disclosure relates to the field of wireless communication technologies but is not limited to the field of wireless communication technologies, and particularly relates to a method and an apparatus for processing information, a terminal, a base station and a storage medium.

### BACKGROUND

In order to improve coverage of cell edge and provide more balanced service quality within the service area, multi-point cooperation is still an important technical means in a new radio (NR) system.

From the perspective of network form, network deployment with a large number of distributed access points and centralized baseband processing will be more conducive to providing a balanced user experience rate, and significantly reduce a delay and signaling overhead caused by handover..

As a frequency band increases, for ensuring network coverage, relatively dense deployment of access points is further required. In a high-frequency band, as integration of active antennas increases, modular active antenna arrays is preferred. An antenna array of each transmission reception point (TRP) can be divided into several relatively independent panels, so that a shape and a number of ports of the entire array can be flexibly adjusted according to deployment scenarios and business needs.

Panels or TRPs can also be connected by an optical fiber for more flexible distributed deployment.

In a millimeter wave band, as the wavelength decreases, a blocking effect caused by an obstacle, such as a human body or a vehicle, will become more significant.

In this case, for ensuring robustness of link connection, cooperation between multi-TRP or multi-panel can also be used to transmit/receive multiple beams from multiple angles, thereby reducing the impact caused by the blocking effect.

During an uplink transmission procedure, uplink control information (UCI) and other information sent by a terminal to a base station can be carried on a physical uplink control channel (PUCCH). If beam-forming technology is used during the uplink transmission, the base station is required to configure beam indication information of the PUCCH for the terminal.

### SUMMARY

Embodiments of the present disclosure provide a method and an apparatus for processing information, a terminal, a base station and a storage medium.

A first aspect of embodiments of the present disclosure provides a method for processing information. The method is performed by a base station, and includes:
sending a network signaling to a terminal, in which the network signaling includes beam indication information configured for a physical uplink control channel (PUCCH) resource indicated by a PUCCH resource indicator (PRI), the beam indication information includes multiple transmission configuration indications (TCIs), and the beam indication information is used by the terminal to perform joint transmission for PUCCHs based on a spatial division multiplexing (SDM) mode of multi-panel or multi-transmission reception point (TRP).

A second aspect of embodiments of the present disclosure provides a method for processing information. The method is performed by a terminal, and includes:
receiving a network signaling sent by a base station, in which the network signaling includes beam indication information configured for a physical uplink control channel (PUCCH) resource indicated by a PUCCH resource indicator (PRI), the beam indication information includes multiple transmission configuration indications (TCIs), and the beam indication information is used by the terminal to perform joint transmission for PUCCHs based on a spatial division multiplexing (SDM) mode of multi-panel or multi-transmission reception point (TRP).

A third aspect of embodiment of the present disclosure provides an apparatus for processing information. The apparatus is applied to a base station, and includes:
a sending module, configured to send a network signaling to a terminal, wherein the network signaling comprises beam indication information configured for a physical uplink control channel (PUCCH) resource indicated by a PUCCH resource indicator (PRI), the beam indication information comprises multiple transmission configuration indications (TCIs), and the beam indication information is used by the terminal to perform joint transmission for PUCCHs based on a spatial division multiplexing (SDM) mode of multi-panel or multi-transmission reception point (TRP).

A fourth aspect of embodiments of the present disclosure provides an apparatus for processing information. The apparatus is applied to a terminal, and includes:
a receiving module, configured to receive a network signaling sent by a base station, wherein the network signaling comprises beam indication information configured for a physical uplink control channel (PUCCH) resource indicated by a PUCCH resource indicator (PRI), the beam indication information comprises multiple transmission configuration indications (TCIs), and the beam indication information is used by the terminal to perform joint transmission for PUCCHs based on a spatial division multiplexing (SDM) mode of multi-panel or multi-transmission reception point (TRP).

A fifth aspect of embodiments of the present disclosure provides a base station. The base station includes a processor, a memory, and an executable program stored on the memory and capable of being run by the processor. When the processor runs the executable program, it executes the method for processing information provided by the aforementioned first aspect.

A sixth aspect of embodiments of the present disclosure provides a terminal. The terminal includes a processor, a memory, and an executable program stored in the memory and capable of being run by the processor. When the processor runs the executable program, it executes the method for processing information provided by the aforementioned second aspect.

A seventh aspect of the embodiments of the present disclosure provides a computer storage medium storing an executable program. When the executable program is executed by a processor, the method for processing information provided by the first aspect or the second aspect can be implemented.

According to the technical solution provided by the embodiments of the present disclosure, in the multi-panel/multi-TRP communication scenario, since the network signaling sent to the terminal includes the beam indication information configured for a PUCCH resource indicated by the PRI, and the beam indication information includes multiple TCIs used by the terminal to perform joint transmission for the PUCCHs based on the SDM mode of the multi-panel/multi-TRP, so that multi-panel of the terminal can perform PUCCH transmission at the same time, thereby improving the throughput of the communication system and improving transmission reliability.

It should be understood that the above general description and the following detailed description are only exemplary and explanatory, and do not limit the embodiments of the present disclosure.

### BRIEF DESCRIPTION OF THE DRAWINGS

The accompanying drawings, which are incorporated in and constitute a part of this specification, illustrate embodiments consistent with the present disclosure and together with the description serve to explain the principles of the embodiments of the present disclosure.
FIG. 1 is a schematic structural diagram of a wireless communication system according to an exemplary embodiment.
FIG. 2 is a schematic flowchart of a method for processing information according to an exemplary embodiment.
FIG. 3 is a schematic diagram of multi-panel transmission of a terminal according to an exemplary embodiment.
FIG. 4A is a schematic diagram of a sequential mapping according to an exemplary embodiment.
FIG. 4B is a schematic diagram of an alternating mapping according to an exemplary embodiment.
FIG. 5 is a schematic flowchart of a method for processing information according to an exemplary embodiment.
FIG. 6A is a schematic flowchart of a method for processing information according to an exemplary embodiment.
FIG. 6B is a schematic flowchart of a method for processing information according to an exemplary embodiment.
FIG. 6C is a schematic flowchart of an uplink multi-panel PUCCH transmission method according to an exemplary embodiment.
FIG. 6D is a schematic flowchart of an uplink multi-panel PUCCH transmission method according to an exemplary embodiment.
FIG. 7A is a block diagram of an apparatus for processing information applicable to a base station according to an exemplary embodiment of the present disclosure.
FIG. 7B is a block diagram of an apparatus for processing information applicable to a terminal according to an exemplary embodiment of the present disclosure.
FIG. 8 is a block diagram of a terminal according to an exemplary embodiment.
FIG. 9 is a block diagram of a base station according to an exemplary embodiment.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with embodiments of the present disclosure. Rather, they are merely examples of apparatus and methods consistent with some aspects of embodiments of the present disclosure.

The term used in the embodiments of the present disclosure is for the purpose of describing specific embodiments only and is not intended to limit the embodiments of the present disclosure. As used in the present disclosure, singular forms "a", "an", and "the" are intended to include plural forms as well, unless the context clearly dictates otherwise. It will also be understood that the term "and/or" as used herein refers to and includes any and all possible combinations of one or more of the associated listed items.

It should be understood that although the terms "first", "second", "third", etc. may be used to describe various information in the embodiments of the present disclosure, the information should not be limited to these terms. These terms are only used to distinguish information of the same type from each other. For example, without departing from the scope of the embodiments of the present disclosure, the first information may also be called second information, and similarly, the second information may also be called first information. Depending on the context, the word "if" as used herein may be interpreted as "when" or "in a case that" or "in response to determining that".

It can be understood that the description of various embodiments in the present disclosure focuses on the differences between the various embodiments, and the similarities or similarities between the embodiments can be referred to each other. For the sake of brevity, they will not be described again one by one.

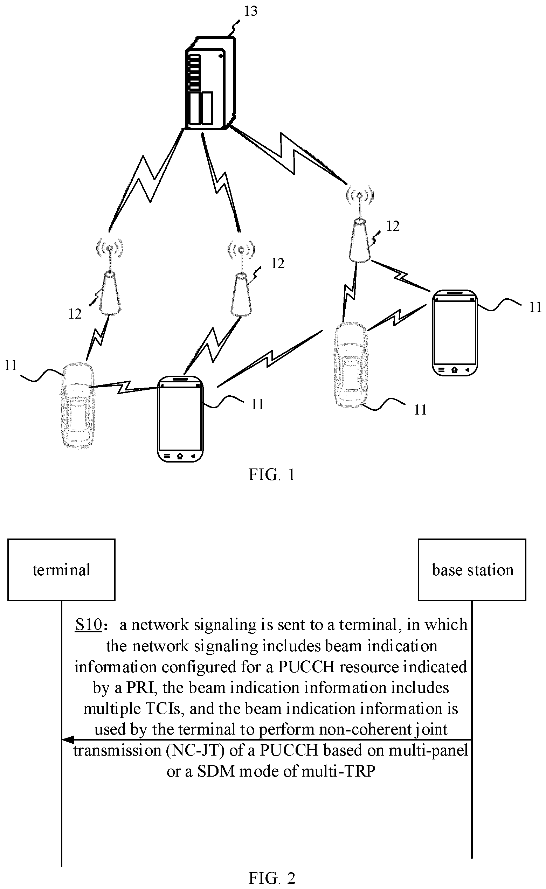

Please refer to FIG. 1, which shows a schematic structural diagram of a wireless communication system provided by an embodiment of the present disclosure. As shown in FIG. 1, the wireless communication system is a communication system based on cellular mobile communication technology. The wireless communication system may include several terminals 11 and several base stations 12.

The terminal 11 may be a device that provides voice and/or data connectivity to a user. The terminal 11 may communicate with one or more core networks via a radio access network (RAN). The terminal 11 may be an Internet of Things terminal, such as a sensor device, a mobile phone (or a "cellular" phone) and a computer with the Internet of Things terminal, for example, which can be a fixed, portable, pocket-sized, handheld, computer-built-in or vehicle-mounted device. For example, a station (STA), subscriber unit, subscriber station, mobile station, mobile, remote station, access point, remote terminal, access terminal, user terminal, user agent, user device, or user equipment (UE). Alternatively, the terminal 11 may be a device of an unmanned aerial vehicle. Alternatively, the terminal 11 may also be a vehicle-mounted device, for example, it may be an on-board computer with a wireless communication function, or a wireless communication device connected to an external on-board computer. Alternatively, the terminal 11 may also be a roadside device, for example, it may be a streetlight, a signal light or other roadside device with a wireless communication function.

The base station 12 may be a network-side device in a wireless communication system. The wireless communication system may be a 4th generation mobile communication system, also known as a long term evolution (LTE) system; or the wireless communication system may also be a 5G system, also called a new radio (NR) system or a 5G NR system. Alternatively, the wireless communication system may also be a next-generation system of the 5G system. An access network in the 5G system can be called an NG-RAN (New Generation-Radio Access Network). Alternatively, the wireless communication system may also be an MTC system.

The base station 12 may be an evolved access device (eNB) used in the 4G system. Alternatively, the base station 12 may also be an access device (gNB) using a centralized distributed architecture in the 5G system. When the base station 12 adopts the centralized distributed architecture, it usually includes a central unit (CU) and at least two distributed units (DUs). The centralized unit is provided with a protocol stack including a packet data convergence protocol (PDCP) layer, a radio link control protocol (RLC) layer, and a media access control (MAC) layer. The distributed unit is provided with a physical (PHY) layer protocol stack. The specific implementation of the base station 12 is not limited in the embodiments of the present disclosure.

A wireless connection between the base station 12 and the terminal 11can be established through a wireless air interface. In different implementations, the wireless air interface is a wireless air interface based on the 4G standard; or the wireless air interface is a wireless air interface based on the 5G standard, for example, the wireless air interface is a new air interface; alternatively, the wireless air interface may also be a wireless air interface based on a next generation mobile communication network technology standard beyond the 5G.

Optionally, an E2E (End to End) or D2D (device to device) connection can also be established between the terminals 11, for example, V2V (vehicle to vehicle) communication, V2I (vehicle to Infrastructure) communication, V2P (vehicle to pedestrian) communication, and other scenes in the vehicle to everything (V2X) communication.

When a connection is established between terminals, if one or more terminals function as a base station in the communication between terminals, the one or more terminals can also be regarded as the above-mentioned base station 12, and the other terminals can be regarded as the above-mentioned terminal 11. For example, in the vehicle to everything scene, the vehicle-mounted terminal A reports its capability information (such as antenna capability information) to another vehicle-mounted terminal B, and the vehicle-mounted terminal B controls the communication between the vehicle-mounted terminal A and the vehicle-mounted terminal B based on its capability information. That is, the vehicle-mounted terminal B acts as a leading vehicle in the vehicle network. At this time, the vehicle-mounted terminal B can be regarded as the above-mentioned base station 12, and the vehicle-mounted terminal A can be regarded as the above-mentioned terminal 11.

Optionally, the above wireless communication system may also include a network management device 13. The several base stations 12 are connected to the network management device 13, respectively. The network management device 13 may be a core network device in the wireless communication system. For example, the network management device 13 may be a mobility management entity (MME) in an evolved packet core (EPC). Alternatively, the network management device can also be other core network devices, such as a serving gateway (SGW), a public data network gateway (PGW), a policy and charging rules function (PCRF), or a home subscriber server (HSS), etc. The implementation form of the network management device 13 is not limited in the embodiments of the present disclosure.

FIG. 2 is a schematic flow chart of a method for processing information according to an exemplary embodiment. The method for processing information can be applied to the base station in the wireless communication system shown in FIG. 1. As shown in FIG. 2, the method may include the following steps.

S10: a network signaling is sent to a terminal, in which the network signaling includes beam indication information configured for a PUCCH resource indicated by a PRI, the beam indication information includes multiple TCIs, and the beam indication information is used by the terminal to perform non-coherent joint transmission (NC-JT) of a PUCCH based on multi-panel or a SDM mode of multi-TRP.

In the case of the NC-JT for the PUCCH, each data stream involved in the joint PUCCH transmission is only mapped to a part of the TRPs.

A terminal may have multiple panels, and the multiple panels of the terminal may point to different beam directions at the same time. The terminal may send uplink data and/or uplink signaling to the base station through transmission beams on different panels, for example, sending the PUCCH; the terminal may also receive downlink data and/or downlink signaling sent by the base station through reception beams on different panels.

The sending/reception beams of different panels of the terminal may be directed to different TRPs of the base station. Each TRP of the base station may include one or more panels, or may be a device in the access network that communicates with the terminal through one or more sectors on the air interface, etc.

For example, a terminal includes two panels, and directions of the two panels of the terminal may be opposite. One of the panels includes one or more antenna elements.

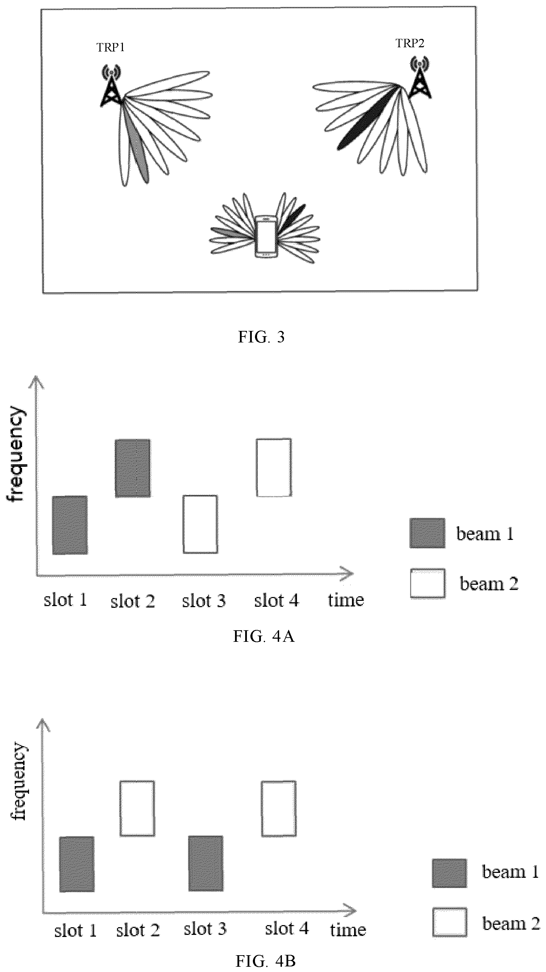

As shown in FIG. 3, a terminal has two panels and may simultaneously send uplink data to TRP1 and TRP2 of the base station.

The base station may use one or more TRPs to send the network signaling to the terminal, in which the network signaling includes at least one of: downlink control information (DCI), media access control (MAC) control element (CE), radio resource control (RRC) signaling.

In one example, each TRP of the base station may use its own physical downlink control channel (PDCCH) to send the DCI signaling to the terminal. The DCI signaling includes beam indication information configured for a PUCCH resource indicated by a PRI. For example, the beam indication information includes TCI1 corresponding to panel 1 of the terminal and TCI2 corresponding to panel 2 of the terminal.

It can be understood that the terminal supports activating the multi-panel at the same time. Different TCIs may indicate the transmission beam directions of different panels of the terminal or beam directions for PUCCH transmission towards multiple different TRPs of the base station, so that the terminal may perform the joint PUCCH transmission based on SDM mode through the multiple different panels at the same time.

In another example, the beam indication information configured for a PUCCH resource indicated by the PRI may also be indicated through a MAC CE signaling. In the specific implementation, the beam indication information may include a TCI state corresponding to a specified codepoint, and different TCI states indicate uplink beam directions of different panels of the terminal.

In another example, the beam indication information configured for a PUCCH resource indicated by the PRI may also be indicated through an RRC signaling. For each PUCCH resource, multiple pieces of spatial relation information of the PUCCH resource (PUCCH-SpatialRelationInfo) may be configured in the RRC signaling, and then the PUCCH-SpatialRelationInfo used by the different panels of the terminal for PUCCH transmission is indicated through the MAC signaling.

The network signaling sent by the base station to the terminal includes the beam indication information configured for the PUCCH resource indicated by the PRI.

The PUCCH is used to carry a UCI.

The PRI is configured to instruct the terminal to select one or more currently used PUCCH resources from the PUCCH resource group. For example, the PRI may indicate a symbol starting position, a symbol length, a PUCCH format, etc., of the PUCCH resource.

The beam indication information may include multiple TCIs, and the different TCIs may be configured to indicate beam directions of different panels of the terminal, so that the terminal performs joint transmission for the PUCCHs based on the SDM of the multi-panel/multi-TRP.

Each TCI corresponds to the sending beam and/or reception beam of a panel of the terminal, and faces towards a transmission TRP direction. Based on quasi co-located (QCL), the TCIs each contains different QCL Type-D source reference signals (RS), which may include at least one of:
channel state information reference signal (CSI-RS); or
a synchronous signal/PBCH block (SSB).

The terminal uses a panel corresponding to the QCL Type-D source RS included in the TCI for transmission and reception. When a unified TCI framework is not configured, the spatial relationship information 1/2 indicated by the SRI combination is used.

In the embodiments, in the multi-panel/multi-TRP communication scenarios, since the network signaling sent to the terminal includes the beam indication information configured for a PUCCH resource indicated by the PRI, and the beam indication information includes multiple TCIs, and is used by the terminal to perform joint transmission for the PUCCHss based on the SDM mode of multi-panel/multi-TRP. In this way, the multi-panel of the terminal can transmit the PUCCH to the multi-TRP at the same time, thereby increasing the reliability and throughput of the transmission, and effectively reduces the transmission delay under multi-TRP.

In an embodiment, the multiple TCIs include a first TCI and a second TCI.

The first TCI is configured to indicate a transmission beam direction of a first panel of the terminal, or a beam direction for sending a PUCCH facing toward the first TRP of the base station.

The second TCI is configured to indicate a transmission beam direction of a second panel of the terminal, or a beam direction for sending a PUCCH facing toward the second TRP of the base station.

For example, if the terminal has two panels, that is, the number of panels of the terminal is N=2, then the terminal will be configured with 2 TCIs, which are simplified here as TCI1 (namely the first TCI) and TCI2 (namely the second TCI). For example, panel 1 corresponds to TCI1, and panel 2 corresponds to TCI2.

In the embodiments, different panels of the terminal correspond to different TCIs (that is, different panels of the terminal correspond to separate TCI states), then the beam directions of the transmission beams of different panels or the beam direction for sending the PUCCH towards the TRP are separately indicated by respective TCIs. In this way, different panels of the terminal can simultaneously transmit the PUCCH to different TRPs based on the SDM mode.

In an embodiment, demodulation reference signal (DMRS) ports associated with different TCIs are the same.

The DMRS is used for channel estimation and related demodulation of a physical channel.

Different TCIs may be associated with the same DMRS port, allowing the same DMRS port to use different uplink beams to transmit the PUCCH.

In an embodiment, when the terminal transmits same UCI through PUCCHs of different panels, the PUCCHs are mapped to a same time-frequency resource.

The UCI may include at least one of: channel state information (CSI), hybrid automatic retransmission request acknowledgement (HARQ-ACK) feedback, or scheduling request (SR).

The CSI may include but is not limited to: a pre-coding matrix indicator (PMI) and/or a channel quality indicator (CQI), etc.

The time-frequency resource refers to a time domain resource and a frequency domain resource used for the PUCCH transmission.

In a specific implementation, the terminal may know various PUCCH formats in advance, determine a corresponding time-frequency resource according to the PUCCH format, and map the PUCCHs to the time-frequency resource when the same UCI is transmitted through the PUCCHs of the different panels.

In an embodiment, different panels of the terminal performing NC-JT for the PUCCHs use different precoding matrices.

For the NC-JT of PUCCHs, different TCIs use different precoders for precoding, and the corresponding panels use their own precoders to perform the PUCCH transmission.

In an embodiment, different TCIs are applied to all PUCCH resources in a PUCCH resource group where the PUCCHs are located.

One PUCCH resource group includes multiple PUCCH resources, and a pair of TCIs that are activated or indicated (i.e., the aforementioned first TCI and second TCI) can use all PUCCH resources in the selected PUCCH resource group for PUCCH transmission.

For example, the PUCCH resource group for the PUCCHs may be determined according to the number of UCI bits to be transmitted, and one resource group may include multiple PUCCH resources.

In an embodiment, the PUCCH resource is configured to not support repetition; or the PUCCH resource is configured to support slot-based repetition; or the PUCCH resource is configured to support sub-slot-based repetition.

In one example, a number of PUCCH repetitions may be determined according to a repetition number configured by a high layer signaling (e.g., an RRC signaling).

In one example, in PUCCH resources configured with the same PUCCH format, the number of PUCCH repetitions is the same.

A sub-slot includes one or more symbols; illustratively, a slot includes one or more sub-slots.

In order to support the transmission of different UCI bit ranges, PUCCH may be divided into two types according to a number of bits: one is a PUCCH format used to carry 1 to 2 bits for UCI transmission, and the other is a PUCCH format used to carry more than 2 bits for UCI transmission.

In addition, PUCCH may also be divided into two types according to uplink coverage and transmission delay: one is a short PUCCH format, which occupies 1 or 2 symbols for transmission, and the other is a long PUCCH format, which occupies 4 to 14 symbols for transmission. To sum up, there are 5 PUCCH formats. The PUCCH format can be shown in Table 1:

**Table 1: PUCCH format**

| PUCCH format | bit length | number of RBs | user multiplexing volume | carried bit number |
|---|---|---|---|---|
| 0 | 1-2 | 1 | 12 | ≤2 |
| 1 | 4-14 | 1 | 12*OCC length | ≤2 |
| 2 | 1-2 | 1, 2..., 16 integers | 0 | >2 |
| 3 | 4-14 | 1, 2, 3, 4, 5, 6, 8, 9, 10, 12, 15, 16 | 0 | >2 |
| 4 | 4-14 | 1 | 2 or 4 | >2 |

The orthogonal cover code (OCC) in Table 1 is used for DMRS reference signals that are in a same code division multiplexing (CDM) group but have different antenna port numbers. The RB (resource block) is 12 subcarriers in a frequency domain and can be a PRB (physical resource block).

For PUCCH transmission for the PUCCH format 0/1/2/3/4, the number of repetitions at the slot level can be configured through RRC signaling nrofSlots, and repetition may be performed in multiple consecutive slots on the same time-frequency resource. The supported number of repetitions is 1, 2, 4, and 8. The PUCCH transmission based on sub-slots refers to PUCCH transmission at transmission time points every 2-symbol or 7-symbol of sub-slot units. That is, if sub-slot is configured as 7, the PUCCH transmission may be performed in the 0th and 7th symbol locations.

Transmission configuration of two transmission occasions (TOs) in the slot is supported, and the same PUCCH is sent for different TRPs, respectively.

There are multiple mapping schemes that may be considered for a mapping relationship between transmission beam directions of the PUCCHs sent by the terminal towards different TRPs and different transmission occasions. The following are two typical schemes. The high-level signaling will configure a specific beam mapping scheme used for this PUCCH transmission.

Scheme a: alternate mapping. The two beam directions are sequentially mapped to multiple configured transmission occasions in cycle. For example, for 4 transmissions, the beam direction mapping pattern is #1#2#1#2.

Scheme b: continuous mapping. The two beam directions are continuously mapped to multiple configured transmission occasions in cycle. For example, for 4 transmissions, the beam direction mapping pattern is #1#1#2#2; for more than 4 transmissions, the pattern is repeated, such as for 8 transmissions, the TCI state mapping pattern is #1#1#2#2#1#1#2#2.

In an embodiment, the PUCCH transmission includes at least one of:
intra-slot frequency hopping transmission; or
inter-slot frequency hopping transmission.

In an embodiment, the PUCCH resource is configured to perform the PUCCH transmission based on the SDM at each hop of intra-slot frequency hopping; or the PUCCH resource is configured to perform the PUCCH transmission based on the SDM at each hop of inter-slot frequency hopping.

For the PUCCH resource configured with the intra-slot frequency hopping, the above-mentioned SDM mode may be used for transmission at each hop.

For the PUCCH resource configured with the inter-slot frequency hopping, the above-mentioned SDM mode may be used for transmission on each slot-level hop.

In an embodiment, all PUCCH formats may be configured to support the intra-slot frequency hopping, and the PUCCH format that supports configuration of inter-slot frequency hopping is the PUCCH formats 1/3/4.

For the configuration of intra-slot frequency hopping, a frequency domain diversity gain may be obtained through the configured frequency hopping option.

For the inter-slot frequency hopping, in the TDM (time division multiplexing) mode, different TRPs correspond to different frequency hopping transmission patterns according to different beam mapping modes. The mapping mode includes the sequential mapping as shown in FIG. 4A, and the alternate mapping as shown in FIG. 4B.

In an embodiment, the TCI includes one of:
a joint TCI;
a separate TCI; or
spatial relationship information.

Under a unified TCI framework configuration, state values of N TCIs configured for the terminal and suitable for simultaneous transmission are determined according to whether the consistency of the multi-transmission beam and the multi-reception beam is established.

If the consistency of multi-transmission beam and multi-reception beam is established, the different panels of the terminal may be indicated through N different joint TCIs.

The joint TCI may be used to determine the direction of the uplink and downlink beams. The uplink beam is used for uplink transmission, and the downlink beam is used for downlink reception.

If the consistency between multi-transmission beam and multi-reception beam is not established, the TCI for each panel during the PUCCH transmission may be jointly indicated to the terminal through N separate UL TCIs.

A separate TCI may usually correspond to an uplink beam of a panel of the terminal. The beam direction of the uplink beam may be jointly indicated to the terminal through N separate TCIs.

When TCI under the unified TCI framework configuration is not used, spatial relationship information (for example, spatialRelationInfo 1/2) may be used to indicate the uplink beam directions of different panels of the terminal.

A sounding reference signal (SRS) is used to estimate uplink channel frequency domain information and perform frequency selective scheduling, for estimating the uplink channel and performing downlink beam-forming. There may be a correspondence relationship between an SRS resource indicator (SRI) and a direction of the uplink beam. Therefore, the SRI of the SRS may be one of the TCIs corresponding to different panels of the terminal.

In an embodiment, the TCI indication information has a plurality of TCI fields. One TCI field indicates a TCI corresponding to one panel of the terminal.

For example, if the terminal has two panels, the TCI is indicated by two TCI fields, and one TCI field indicates a TCI corresponding to one panel.

In another embodiment, the TCI indication information has one TCI field. Codepoints of the TCI field indicate the TCIs of multi-panel of the terminal.

At this time, the TCI indication information includes a unified TCI field, which includes one or more bits, and different bit values of the one or more bits are different codepoints. The codepoints in the TCI field may simultaneously indicate the TCIs of the multi-panel of the terminal.

For example, the TCI field may be divided into multiple subfields, and one subfield indicates a TCI of one panel. A subfield may include one or more bits.

As another example, one codepoint in the TCI field corresponds to a combination of multiple TCIs at the same time.

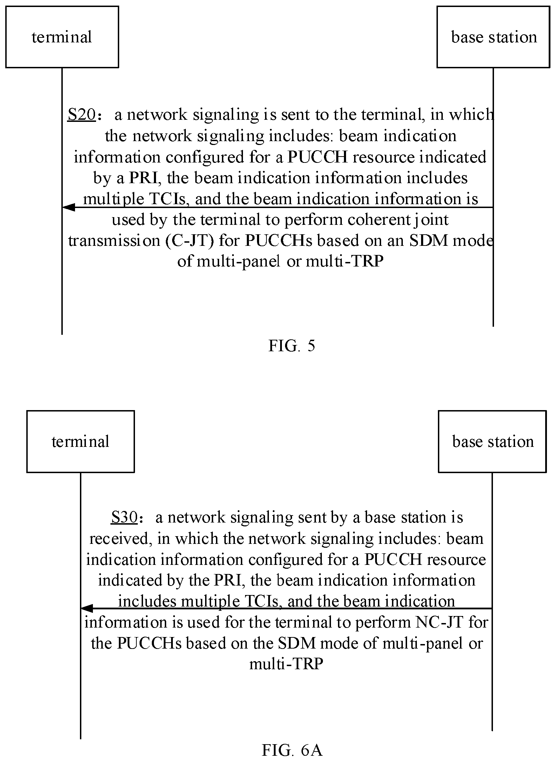

FIG. 5 is a schematic flow chart of a method for processing information according to an exemplary embodiment. The method for processing information is applicable to the base station in the wireless communication system shown in FIG. 1. As shown in FIG. 5, the method may include the following steps.

S20: a network signaling is sent to the terminal, in which the network signaling includes: beam indication information configured for a PUCCH resource indicated by a PRI, the beam indication information includes multiple TCIs, and the beam indication information is used by the terminal to perform coherent joint transmission (C-JT) of PUCCHs based on an SDM mode of multi-panel or multi-TRP.

In the case of the C-JT for the PUCCHs, each data stream involved in the joint transmission for the PUCCHs will be mapped to multi-TRP through weighted vectors during a precoding process.

In an embodiment, the multiple TCIs include a first TCI and a second TCI.

The first TCI is configured to indicate a transmission beam direction of a first panel of the terminal or a beam direction for PUCCH transmission toward the first TRP of the base station.

The second TCI is configured to indicate a transmission beam direction of a second panel of the terminal or a beam direction for PUCCH transmission toward the second TRP of the base station.

In an embodiment, demodulation reference signal (DMRS) ports associated with different TCIs are the same.

In an embodiment, when the terminal transmits same uplink control information (UCI) through PUCCHs of different panels, the same time-frequency resource is used.

In an embodiment, different panels of the terminal performing the C-JT of PUCCHs use a same precoding matrix.

For the C-JT for the PUCCHs, all antenna units of all panels of the terminal send precoding information through a same precoder, and are beamforming in correspondence with the beam directions indicated by two different TCIs.

In an embodiment, different TCIs are applied to all PUCCH resources in a PUCCH resource group of the PUCCHs.

In an embodiment, the PUCCH resource is configured to not support repetition; or the PUCCH resource is configured to support slot-based repetition; or the PUCCH resource is configured to support sub-slot-based repetition.

In an embodiment, the PUCCH transmission includes at least one of:
intra-slot frequency hopping transmission; or
inter-slot frequency hopping transmission.

In an embodiment, the PUCCH resource is configured to perform the PUCCH transmission based on the SDM at each hop of intra-slot frequency hopping; or, the PUCCH resource is configured to perform the PUCCH transmission based on the SDM at each hop of inter-slot frequency hopping.

In an embodiment, the TCI includes one of:
a joint TCI;
a separate TCI; or
spatial relationship information.

In an embodiment, indication information of the TCIs has a plurality of TCI fields; and one TCI field indicates a TCI corresponding to one panel of the terminal.

In another embodiment, indication information of the TCIs has one TCI field; and different codepoints of the TCI field indicate the TCIs of the multi-panel of the terminal.

FIG. 6A is a schematic flow chart of a method for processing information according to an exemplary embodiment. The method for processing information is applicable to the terminal in the wireless communication system shown in FIG. 1. As shown in FIG. 6A, the method may include the following steps.

S30: a network signaling sent by a base station is received, in which the network signaling includes: beam indication information configured for a PUCCH resource indicated by the PRI, the beam indication information includes multiple TCIs, and the beam indication information is used for the terminal to perform NC-JT for the PUCCHs based on the SDM mode of multi-panel or multi-TRP.

In an embodiment, the multiple TCIs include a first TCI and a second TCI.

The first TCI is configured to indicate a transmission beam direction of a first panel of the terminal or a beam direction for PUCCH transmission toward a first TRP of the base station.

The second TCI is configured to indicate a transmission beam direction of a second panel of the terminal or a beam direction for PUCCH transmission towards a second TRP of the base station.

In an embodiment, DMRS ports associated with different TCIs are the same.

In an embodiment, when the terminal transmits same UCI through PUCCHs of different panels, the same time-frequency resource is used.

In an embodiment, different panels of the terminal performing the NC-JT of PUCCHs use different precoding matrices.

In an embodiment, different TCIs are applied to all PUCCH resources in a PUCCH resource group of the PUCCHs.

In an embodiment, the PUCCH resource is configured to not support repetition; or the PUCCH resource is configured to support slot-based repetition; or the PUCCH resource is configured to support sub-slot-based repetition.

In an embodiment, the PUCCH transmission includes at least one of:
intra-slot frequency hopping transmission; or
inter-slot frequency hopping transmission.

In an embodiment, the TCI includes one of:
a joint TCI;
a separate TCI; or
spatial relationship information.

In an embodiment, indication information of the TCIs has a plurality of TCI fields; and one TCI field indicates a TCI corresponding to one panel of the terminal.

In another embodiment, indication information of the TCIs has one TCI field; and different codepoints of the TCI field indicate the TCIs of the multi-panel of the terminal.

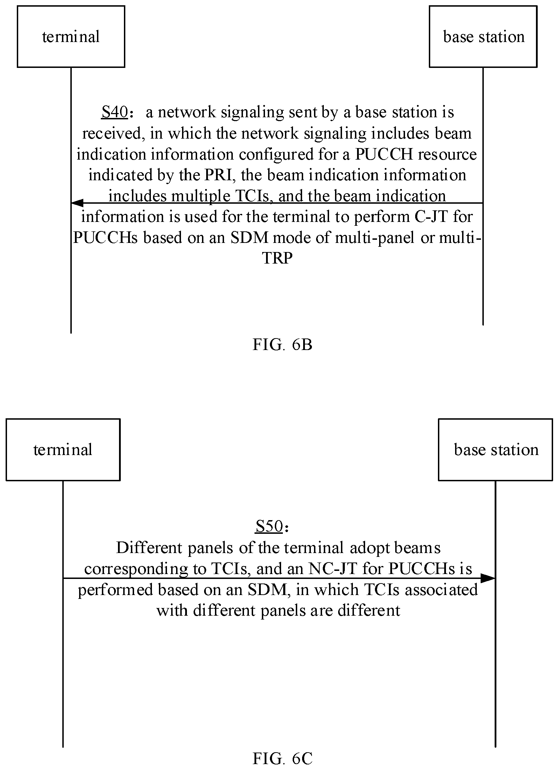

FIG. 6B is a schematic flow chart of a method for processing information according to an exemplary embodiment. The method for processing information is applicable to the terminal in the wireless communication system shown in FIG. 1. As shown in FIG. 6B, the method may include the following steps.

S40: a network signaling sent by a base station is received, in which the network signaling includes beam indication information configured for a PUCCH resource indicated by the PRI, the beam indication information includes multiple TCIs, and the beam indication information is used for the terminal to perform C-JT of PUCCHs based on an SDM mode of multi-panel or multi-TRP.

In the case of the C-JT for the PUCCHs, each data stream involved in the joint transmission for the PUCCHs will be mapped to multi-TRP through weighted vectors during a precoding process.

In an embodiment, the multiple TCIs include a first TCI and a second TCI.

The first TCI is configured to indicate a transmission beam direction of a first panel of the terminal or a beam direction for PUCCH transmission toward the first TRP of the base station.

The second TCI is configured to indicate a transmission beam direction of a second panel of the terminal or a beam direction for PUCCH transmission toward the second TRP of the base station.

In an embodiment, DMRS ports associated with different TCIs are the same.

In an embodiment, when the terminal transmits same UCI through PUCCHs of different panels, the same time-frequency resource is used.

In an embodiment, different panels of the terminal performing the C-JT of PUCCHs use a same precoding matrix.

For the C-JT for the PUCCHs, all antenna units of all panels of the terminal send precoding information through a same precoder, and are beamforming in correspondence with the beam directions indicated by two different TCIs.

In an embodiment, different TCIs are applied to all PUCCH resources in a PUCCH resource group of the PUCCHs.

In an embodiment, the PUCCH resource is configured to not support repetition; or the PUCCH resource is configured to support slot-based repetition; or the PUCCH resource is configured to support sub-slot-based repetition.

In an embodiment, the PUCCH transmission includes at least one of:
intra-slot frequency hopping transmission; or
inter-slot frequency hopping transmission.

In an embodiment, the PUCCH resource is configured to perform the PUCCH transmission based on the SDM at each hop of intra-slot frequency hopping; or the PUCCH resource is configured to perform the PUCCH transmission based on the SDM at each hop of inter-slot frequency hopping.

In an embodiment, the TCI includes one of:
a joint TCI;
a separate TCI; or
spatial relationship information.

In an embodiment, indication information of the TCIs has a plurality of TCI fields; and one TCI field indicates a TCI corresponding to one panel of the terminal.

In another embodiment, indication information of the TCIs has one TCI field; and different codepoints of the TCI field indicate the TCIs of the multi-panel of the terminal.

FIG. 6C is a schematic flowchart of a method for uplink multi-panel PUCCH transmission according to an exemplary embodiment. The method is applicable to the terminal in the wireless communication system shown in FIG. 1. As shown in FIG. 6C, this method includes the following steps.

S50: Different panels of the terminal adopt beams corresponding to TCIs, and an NC-JT of PUCCHs is performed based on an SDM, in which TCIs associated with different panels are different.

In an embodiment, the method may further include:
receiving, by the terminal, a network signaling sent by a base station, in which the network signaling includes: beam indication information configured for a PUCCH resource indicated by a PRI, the beam indication information includes multiple TCIs, and the beam indication information is used by the terminal to perform the NC-JT of PUCCHs based on an SDM mode of multi-panel/multi-TRP.

In an embodiment, the multiple TCIs include a first TCI and a second TCI.

The first TCI is configured to indicate a transmission beam direction of a first panel of the terminal or a beam direction for PUCCH transmission toward a first TRP of the base station.

The second TCI is configured to indicate a transmission beam direction of a second panel of the terminal or a beam direction for PUCCH transmission towards a second TRP of the base station.

In an embodiment, DMRS ports associated with different TCIs are the same.

In an embodiment, when the terminal transmits same UCI through PUCCHs of different panels, the same time-frequency resource is used.

In an embodiment, different panels of the terminal performing the NC-JT of PUCCHs use different precoding matrices.

In an embodiment, different TCIs are applied to all PUCCH resources in a PUCCH resource group of the PUCCHs.

In an embodiment, the PUCCH resource is configured to not support repetition; or the PUCCH resource is configured to support slot-based repetition; or the PUCCH resource is configured to support sub-slot-based repetition.

In an embodiment, the PUCCH transmission includes at least one of:
intra-slot frequency hopping transmission; or
inter-slot frequency hopping transmission.

In an embodiment, the PUCCH resource is configured to perform the PUCCH transmission based on the SDM at each hop of intra-slot frequency hopping; or the PUCCH resource is configured to perform the PUCCH transmission based on the SDM at each hop of inter-slot frequency hopping.

In an embodiment, the TCI includes one of:
a joint TCI;
a separate TCI; or
spatial relationship information.

In an embodiment, indication information of the TCIs has a plurality of TCI fields; and one TCI field indicates a TCI corresponding to one panel of the terminal.

In another embodiment, indication information of the TCIs has one TCI field; and different codepoints of the TCI field indicate the TCIs of the multi-panel of the terminal.

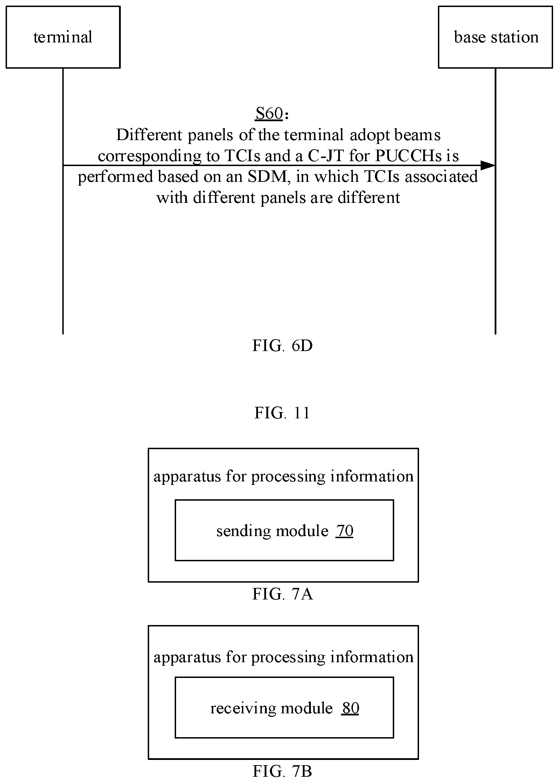

FIG. 6D is a schematic flowchart of a method for uplink multi-panel PUCCH transmission according to an exemplary embodiment. The method is applicable to the terminal in the wireless communication system shown in FIG. 1. As shown in FIG. 6D, this method includes the following steps.

S60: Different panels of the terminal adopt beams corresponding to TCIs and a C-JT of PUCCHs is performed based on an SDM, in which TCIs associated with different panels are different.

In an embodiment, the method may further include:
receiving, by the terminal, a network signaling sent by a base station, in which the network signaling includes: beam indication information configured for a PUCCH resource indicated by a PRI, the beam indication information includes multiple TCIs, and the beam indication information is used by the terminal to perform the C-JT of PUCCHs based on an SDM mode of multi-panel/multi-TRP.

In an embodiment, the different TCIs include a first TCI and a second TCI.

The first TCI is configured to indicate a transmission beam direction of a first panel of the terminal or a beam direction for PUCCH transmission toward the first TRP of the base station.

The second TCI is configured to indicate a transmission beam direction of a second panel of the terminal or a beam direction for PUCCH transmission toward the second TRP of the base station.

In an embodiment, DMRS ports associated with different TCIs are the same.

In an embodiment, when the terminal transmits same UCI through PUCCHs of different panels, the same time-frequency resource is used.

In an embodiment, different panels of the terminal performing the C-JT of PUCCHs use a same precoding matrix.

In an embodiment, different TCIs are applied to all PUCCH resources in a PUCCH resource group of the PUCCHs.

In an embodiment, the PUCCH resource is configured to not support repetition; or the PUCCH resource is configured to support slot-based repetition; or the PUCCH resource is configured to support sub-slot-based repetition.

In an embodiment, the PUCCH transmission includes at least one of:
intra-slot frequency hopping transmission; or
inter-slot frequency hopping transmission.

In an embodiment, the PUCCH resource is configured to perform the PUCCH transmission based on the SDM at each hop of intra-slot frequency hopping; or the PUCCH resource is configured to perform the PUCCH transmission based on the SDM at each hop of inter-slot frequency hopping.

In an embodiment, the TCI includes one of:
a joint TCI;
a separate TCI; or
spatial relationship information.

In an embodiment, indication information of the TCIs has a plurality of TCI fields;
in which one TCI field indicates a TCI corresponding to one panel of the terminal.

In another embodiment, indication information of the TCIs has one TCI field; and
different codepoints of the TCI field indicate the TCIs of the multi-panel of the terminal.

In the uplink enhancement of R18 in the 5G NR system, in order to solve the transmission scheme of simultaneous PUCCH channel transmission based on multi-panel/multi-TRP, the embodiments of the present disclosure provide a method for processing information, the simultaneous PUCCH transmission is performed based on the SDM mode of the multi-panel/multi-TRP, to support higher throughput and more reliable transmission performance. In order to meet the common transmission requirements of multiple uplink panels, the terminal is required to have the simultaneous multi-panel transmission capability.

It is considered to configure N TCI states that activate/instruct the terminal to be suitable for simultaneous transmission based on the unified TCI framework. According to whether the consistency of multi-transmission beam and multi-reception beam is established, which may be N different joint TCIs or N separate UL TCI being indicated together to the terminal. For the terminal, since R18 only considers N=2, multi-TCI is simplified to TCI1 and TCI2 here, each TCI corresponds to a transmission/reception beam of one panel of the terminal and towards a transmission TRP direction.

Each TCI contains a different QCL Type-D source RS, and the terminal uses the panel corresponding to the QCL Type-D source RS contained in the TCI for reception.

When the unified TCI is not configured, falling back to the R15/16 indication scheme and use the spatialRelationInfo 1/2 of the SRI combination indication.

### Method 1: PUCCH-based SDM NC-JT transmission

For one PUCCH resource indicated by the PRI in a DCI, TCI1 and TCI2 are associated with the same DMRS port at the same time, and the same UCI data is mapped on the same time-frequency resource through different panels/TRPs.

A PUCCH resource group includes multiple PUCCH resources. A pair of activated or indicated TCIs may be applied to all PUCCH resources in the PUCCH resource group where the PUCCH is located at the same time. Similarly, the PUCCH may also use a pair of TCIs that support multi-panel/multi-TRP transmission and are effective for the PUCCH resource group where the PUCCH is located.

Different TCI applies different precoder for precoding, and the corresponding panel uses its own precoder to send PUCCH.

All PUCCH transmission formats, such as PUCCH format 1, are supported.

Different transmission methods of the PUCCH resource are supported, including: transmission without repetition, configuration of repetition based on slot/sub-slot in the same slot or multiple slots.

For the PUCCH resource configured with the intra-slot frequency hopping, the above-mentioned SDM mode may be used for transmission on each hop.

For the PUCCH resource configured with the inter-slot frequency hopping, the above-mentioned SDM mode may be used for transmission on each slot-level hop.

### Method 2: PUCCH-based SDM CJT transmission

For one PUCCH resource indicated by PRI, TCI1 and TCI2 are associated with the same DMRS port at the same time, and the same UCI data is mapped on the same time-frequency resource through different panels/TRPs.

The TCIs may be applied, at the same time, to all PUCCH resources in the PUCCH resource group where the PUCCH is located.

All antenna units of all panels of the terminal send precoding information through a same precoder, and are beamforming in correspondence to two different TCI directions.

All PUCCH transmission formats, such as PUCCH format 1, are supported.

Different transmission schemes for PUCCH resources are supported, including: transmission without repetition, repetition based on slot/sub-slot configured in a same slot or multiple slots.

For PUCCH resources configured with intra-slot frequency hopping, the above-mentioned SDM mode may be used for transmission on each hop.

For PUCCH resources configured with inter-slot frequency hopping, the above-mentioned SDM mode may be used for transmission on each slot-level hop.

In the above embodiments, there are provided the SDM transmission scheme and beam indication method for the uplink PUCCH channel supporting multi-panel/multi-TRP transmission under S-DCI scheduling.

The following are device embodiments of the present disclosure, which can be used to perform method embodiments of the present disclosure. For details not disclosed in the device embodiments of the disclosure, please refer to the method embodiments of the disclosure.

FIG. 7A is a block diagram of an apparatus for processing information, applied to a base station, according to an exemplary embodiment of the present disclosure. As shown in FIG. 7A, the apparatus for processing information can be implemented as all or part of the base station in the implementation environment shown in FIG. 1, through hardware or a combination of software and hardware, to perform steps of the methods for processing information in the embodiments shown in FIG. 2 or FIG. 5. The apparatus for processing information may include:

a sending module 70, configured to send a network signaling to a terminal, in which the network signaling includes beam indication information configured for a PUCCH resource indicated by a PRI, the beam indication information includes multiple TCIs, and the beam indication information is used by the terminal to perform joint transmission for PUCCHs based on an SDM mode of multi-panel or multi-TRP.

In an embodiment, the multiple TCIs include a first TCI and a second TCI.

The first TCI is configured to indicate a transmission beam direction of a first panel of the terminal or a beam direction for PUCCH transmission towards a first TRP of the base station.

The second TCI is configured to indicate a transmission beam direction of a second panel of the terminal or a beam direction for PUCCH transmission towards a second TRP of the base station.

In an embodiment, DMRS ports associated with different TCIs are the same.

In an embodiment, when the terminal transmits same uplink control information UCI through PUCCHs of different panels, a same time-frequency resource is used.

In an embodiment, the PUCCH transmission is: NC-JT for the PUCCHs, or C-JT for the PUCCHs.

In an embodiment, different panels of the terminal performing the NC-JT of PUCCHs use different precoding matrices.

In an embodiment, different panels of the terminal performing the C-JT of PUCCHs use a same precoding matrix.

In an embodiment, different TCIs are applied to all PUCCH resources in a PUCCH resource group of the PUCCHs.

In an embodiment, the PUCCH resource is configured to not support repetition; or the PUCCH resource is configured to support slot-based repetition; or the PUCCH resource is configured to support sub-slot-based repetition.

In an embodiment, the PUCCH transmission includes at least one of:
intra-slot frequency hopping transmission; or
inter-slot frequency hopping transmission.

In an embodiment, the PUCCH resource is configured to perform the PUCCH transmission based on the SDM at each hop of intra-slot frequency hopping; or the PUCCH resource is configured to perform the PUCCH transmission based on the SDM at each hop of inter-slot frequency hopping.

In an embodiment, the TCI includes one of:
a joint TCI;
a separate TCI; or
spatial relationship information.

In an embodiment, indication information of the TCIs has a plurality of TCI fields;
in which one TCI field indicates a TCI corresponding to one panel of the terminal.

In an embodiment, indication information of the TCIs has one TCI field;
different codepoints of the TCI field indicate the TCIs of multi-panel of the terminal.

In an embodiment, the network signaling includes at least one of:
a DCI;
a MAC-CE; or
an RRC signaling.

FIG. 7B is a block diagram of an apparatus for processing information, applied to a terminal, according to an exemplary embodiment of the present disclosure. As shown in FIG. 7B, the apparatus for processing information can be implemented as all or part of the terminal in the implementation environment shown in FIG. 1, through hardware or a combination of software and hardware, to perform steps of the methods for information processing in the embodiment shown in FIG. 6A or FIG. 6B. The apparatus for processing information may include:
a receiving module 80, configured to receive a network signaling sent by the base station, in which the network signaling includes beam indication information configured for a PUCCH resource indicated by the PRI, the beam indication information includes multiple TCIs, and the beam indication information is used by the terminal to perform joint transmission for PUCCHs based on an SDM mode of multi-panel or multi-TRP.

In an embodiment, the multiple TCIs include a first TCI and a second TCI.

The first TCI is configured to indicate a transmission beam direction of a first panel of the terminal or a beam direction for PUCCH transmission towards a first TRP of the base station.

The second TCI is configured to indicate a transmission beam direction of a second panel of the terminal or a beam direction for PUCCH transmission towards a second TRP of the base station.

In an embodiment, DMRS ports associated with different TCIs are the same.

In an embodiment, when the terminal transmits same uplink control information UCI through PUCCHs of different panels, a same time-frequency resource is used.

In an embodiment, the PUCCH transmission includes: NC-JT for the PUCCHs, or C-JT for the PUCCHs.

In an embodiment, different panels of the terminal performing the NC-JT of PUCCHs use different precoding matrices.

In an embodiment, different panels of the terminal perform the C-JT of PUCCHs use a same precoding matrix.

In an embodiment, different TCIs are applied to all PUCCH resources in a PUCCH resource group of the PUCCHs.

In an embodiment, the PUCCH resource is configured to not support repetition; or the PUCCH resource is configured to support slot-based repetition; or the PUCCH resource is configured to support sub-slot-based repetition.

In an embodiment, the PUCCH transmission includes at least one of:
intra-slot frequency hopping transmission; or
inter-slot frequency hopping transmission.

In an embodiment, the PUCCH resource is configured to perform the PUCCH transmission based on the SDM at each hop of intra-slot frequency hopping; or the PUCCH resource is configured to perform the PUCCH transmission based on the SDM at each hop of inter-slot frequency hopping.

In an embodiment, the TCI includes one of:
a joint TCI;
a separate TCI; or
spatial relationship information.

In an embodiment, indication information of the TCIs has a plurality of TCI fields;
in which one TCI field indicates a TCI corresponding to one panel of the terminal.

In an embodiment, indication information of the TCIs has one TCI field;
different codepoints of the TCI field indicate the TCIs of multi-panel of the terminal.

In an embodiment, the network signaling includes at least one of:
a DCI;
a MAC-CE; or
an RRC signaling.

An embodiment of the present disclosure provides a terminal, including a processor, a memory, and an executable program stored in the memory and capable of being run by the processor. When the processor runs the executable program, it executes the steps of the methods for processing information applied to terminals or the method for uplink multi-panel PUCCH transmission in the foregoing embodiments.

The processor may include various types of storage media, which are non-transitory computer storage media that can continue to store information stored thereon after the terminal is powered off.

The processor may be connected to the memory through a bus or the like, and be used to read the executable program stored on the memory, for example, at least one of the methods shown in FIGS. 6A to 6D .

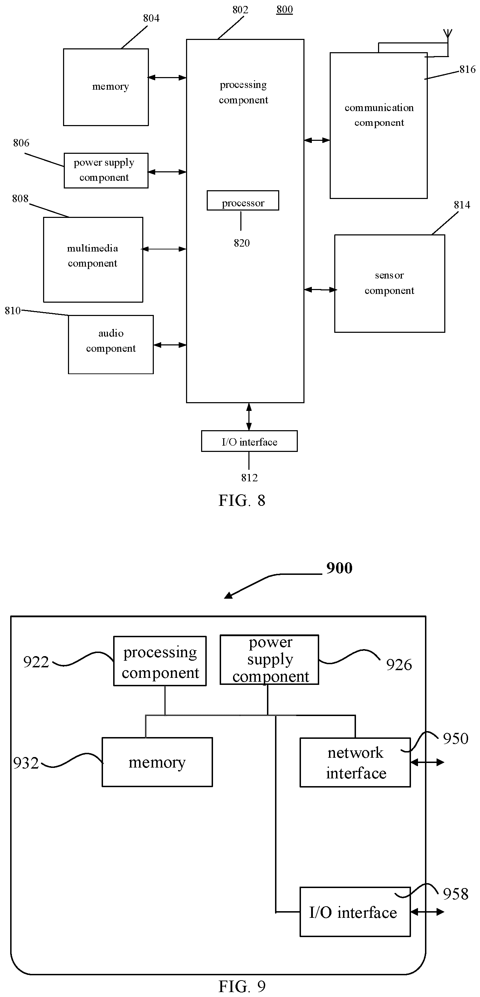

FIG. 8 is a block diagram of a terminal according to an exemplary embodiment. For example, the terminal 800 may be a mobile phone, a computer, a digital broadcast user device, a messaging device, a game console, a tablet device, a medical device, a fitness device, a personal digital assistant, or the like.

Referring to FIG. 8, the terminal 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operations of the terminal 800, such as operations associated with display, phone calls, data communications, camera operations, and recording operations. The processing component 802 may include one or more processors 820 to execute instructions to generate all or part of the steps of the methods described above. Additionally, the processing component 802 may include one or more modules that facilitate interaction between the processing component 802 and other components. For example, the processing component 802 may include a multimedia module to facilitate interaction between the multimedia component 808 and the processing component 802.

The memory 804 is configured to store various types of data to support operations at the terminal 800. Examples of such data include instructions for any application or method operating on the terminal 800, contact data, phonebook data, messages, pictures, videos, etc. The memory 804 may be implemented by any type of volatile or non-volatile storage device, or a combination thereof, such as a static random access memory (SRAM), electrically erasable programmable read-only memory (EEPROM), erasable programmable read-only memory (EEPROM), programmable read-only memory (EPROM), programmable read-only memory (PROM), read-only memory (ROM), magnetic memory, flash memory, magnetic or optical disk.

The power supply component 806 provides power to various components of the terminal 800. The power component 806 may include a power management system, one or more power supplies, and other components associated with generating, managing, and distributing power to the terminal 800.

The multimedia component 808 includes a screen that provides an output interface between the terminal 800 and the user. In an embodiment, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundary of a touch or slide action, but also detect the duration and pressure associated with the touch or slide action. In an embodiment, the multimedia component 808 includes a front-facing camera and/or a rear-facing camera. When the terminal 800 is in an operation mode, such as a shooting mode or a video mode, the front camera and/or the rear camera may receive external multimedia data. Each front-facing camera and rear-facing camera may be a fixed optical lens system or have a focal length and optical zoom capabilities.

The audio component 810 is configured to output and/or input audio signals. For example, the audio component 810 includes a microphone (MIC) configured to receive external audio signals when the terminal 800 is in operating modes, such as call mode, recording mode, and voice recognition mode. The received audio signal may be further stored in the memory 804 or sent via the communication component 816. In an embodiment, the audio component 810 also includes a speaker for outputting audio signals.

The I/O interface 812 provides an interface between the processing component 802 and a peripheral interface module, which may be a keyboard, a click wheel, a button, etc. These buttons may include, but are not limited to: a home button, a volume button, a start button, and a lock button.

The sensor component 814 includes one or more sensors that provide various aspects of status assessment for the terminal 800. For example, the sensor component 814 can detect the open/closed state of the device 800, the relative positioning of components, such as the display and keypad of the terminal 800, and the sensor component 814 can also detect the position change of the terminal 800 or a component of the terminal 800, the presence or absence of user contact with the terminal 800, the orientation or acceleration/deceleration of the terminal 800 and the temperature change of the terminal 800. The sensor component 814 may include a proximity sensor configured to detect the presence of nearby objects without any physical contact. The sensor component 814 may also include a light sensor, such as a CMOS or CCD image sensor, for use in imaging applications. In an embodiment, the sensor component 814 may also include an acceleration sensor, a gyroscope sensor, a magnetic sensor, a pressure sensor, or a temperature sensor.

The communication component 816 is configured to facilitate wired or wireless communication between the terminal 800 and other devices. The terminal 800 can access a wireless network based on a communication standard, such as WiFi, 2G, 3G, 4G or 5G, or a combination thereof. In one exemplary embodiment, the communication component 816 receives broadcast signals or broadcast related information from an external broadcast management system via a broadcast channel. In one exemplary embodiment, the communications component 816 also includes a near field communications (NFC) module to facilitate short-range communications. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the terminal 800 may be configured to by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components are implemented for executing the above method.

In an exemplary embodiment, there is further provided a non-transitory computer-readable storage medium including instructions, such as a memory 804 including instructions. The instructions may be executed by the processor 820 of the terminal 800 to perform any of the above methods applied to the terminal. For example, the non-transitory computer-readable storage medium may be a ROM, random access memory (RAM), CD-ROM, magnetic tape, floppy disk, optical data storage device, etc.

FIG. 9 is a block diagram of a base station according to an exemplary embodiment. For example, the base station 900 may be provided as a network device.

Referring to FIG. 9, the base station 900 includes a processing component 922, which further includes one or more processors, and memory resources represented by the memory 932 for storing instructions, such as application programs, executable by the processing component 922. The application program stored in the memory 932 may include one or more modules, each corresponding to a set of instructions. In addition, the processing component 922 is configured to execute instructions to perform any of the foregoing methods applied to the base station, for example, the method shown in FIG. 2 or FIG. 5.

The base station 900 may also include a power supply component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server^{™}, Mac OS X^{™}, Unix^{™}, Linux^{™}, FreeBSD^{™} or the like.

In an exemplary embodiment, there is further provided a non-transitory computer-readable storage medium including instructions, such as a memory 932 including instructions. The instructions can be used by the processing component 922 of the base station 900 to perform any of the above methods applied in the base station. For example, the non-transitory computer-readable storage medium may be a ROM, a random access memory (RAM), a CD-ROM, a magnetic tape, a floppy disk, an optical data storage device, etc.

Other embodiments of the present disclosure will be readily apparent to those skilled in the art from consideration of the specification and practice of the present disclosure disclosed herein. The present disclosure is intended to cover any variations, uses, or adaptations of the present disclosure that follow the general principles of the present disclosure and include common sense or customary technical means in the technical field that are not disclosed in the present disclosure. It is intended that the specification and examples be considered as exemplary only, with a true scope and spirit of the present disclosure being indicated by the following claims.

It is to be understood that the present disclosure is not limited to the precise construction described above and illustrated in the accompanying drawings, and that various modifications and changes may be made without departing from the scope thereof. The scope of the present disclosure is limited only by the appended claims.

## Claims

1. A method for processing information, performed by a base station, comprising:
sending a network signaling to a terminal, wherein the network signaling comprises beam indication information configured for a physical uplink control channel (PUCCH) resource indicated by a PUCCH resource indicator (PRI), the beam indication information comprises multiple transmission configuration indications (TCIs), and the beam indication information is used by the terminal to perform joint transmission for PUCCHs based on a spatial division multiplexing (SDM) mode of multi-panel or multi-transmission reception point (TRP).

2. The method according to claim 1, wherein the multiple TCIs comprises a first TCI and a second TCI;
the first TCI is configured to indicate a transmission beam direction of a first panel of the terminal or a beam direction for PUCCH transmission towards a first TRP of the base station; and
the second TCI is configured to indicate a transmission beam direction of a second panel of the terminal or a beam direction for PUCCH transmission towards a second TRP of the base station.

3. The method according to any one of claims 1 to 2, wherein demodulation reference signal (DMRS) ports associated with different TCIs are the same.

4. The method according to any one of claims 1 to 3, wherein,
in a case that the terminal transmits same uplink control information (UCI) through PUCCHs of different panels, a same time-frequency resource is mapped.

5. The method according to any one of claims 1 to 4, wherein the PUCCH transmission comprises: non-coherent joint transmission (NC-JT) of the PUCCHs, or coherent joint transmission (C-JT) of the PUCCHs.

6. The method according to claim 5, wherein different panels of the terminal performing the NC-JT of the PUCCHs use different precoding matrices.

7. The method according to claim 5, wherein different panels of the terminal performing the C-JT for the PUCCHs use a same precoding matrix.

8. The method according to any one of claims 1 to 7, wherein different TCIs are applied to all PUCCH resources in a PUCCH resource group where the PUCCHs are located.

9. The method according to any one of claims 1 to 8, wherein,
the PUCCH resource is configured to not support repetition;
or,
the PUCCH resource is configured to support slot-based repetition;
or,
the PUCCH resource is configured to support sub-slot-based repetition.

10. The method according to any one of claims 1 to 9, wherein the PUCCH transmission comprises at least one of:
intra-slot frequency hopping transmission; or
inter-slot frequency hopping transmission.

11. The method according to claim 10, wherein,
the PUCCH resource is configured to perform the PUCCH transmission based on the SDM at each hop of intra-slot frequency hopping;
or,
the PUCCH resource is configured to perform the PUCCH transmission based on the SDM at each hop of inter-slot frequency hopping.

12. The method according to any one of claims 1 to 11, wherein the TCI comprises one of:
a joint TCI;
a separate TCI; or
spatial relationship information.

13. The method according to any one of claims 1 to 12, wherein,
indication information of the TCIs has a plurality of TCI fields;
wherein one TCI field indicates a TCI corresponding to one panel of the terminal.

14. The method according to any one of claims 1 to 12, wherein indication information of the TCIs has one TCI field; and
different codepoints of the TCI field indicate TCIs of the multi-panel of the terminal.

15. A method for processing information, performed by a terminal, comprising:
receiving a network signaling sent by a base station, wherein the network signaling comprises beam indication information configured for a physical uplink control channel (PUCCH) resource indicated by a PUCCH resource indicator (PRI), the beam indication information comprises multiple transmission configuration indications (TCIs), and the beam indication information is used by the terminal to perform joint transmission for PUCCHs based on a spatial division multiplexing (SDM) mode of multi-panel or multi-transmission reception point (TRP).

16. The method according to claim 15, wherein the multiple TCIs comprises a first TCI and a second TCI;
the first TCI is configured to indicate a transmission beam direction of a first panel of the terminal or a beam direction for PUCCH transmission towards a first TRP of the base station; and
the second TCI is configured to indicate a transmission beam direction of a second panel of the terminal or a beam direction for PUCCH transmission towards a second TRP of the base station.

17. The method according to any one of claims 15 to 16, wherein demodulation reference signal (DMRS) ports associated with different TCIs are the same.

18. The method according to any one of claims 15 to 17, wherein in a case that the terminal transmits same uplink control information (UCI) through PUCCHs of different panels, a same time-frequency resource is used.

19. The method according to any one of claims 15 to 18, wherein the PUCCH transmission comprises: non-coherent joint transmission (NC-JT) of the PUCCHs, or coherent joint transmission (C-JT) of the PUCCHs.

20. The method according to claim 19, wherein different panels of the terminal performing the NC-JT for the PUCCHs use different precoding matrices.

21. The method according to claim 19, wherein different panels of the terminal performing the C-JT for the PUCCHs use a same precoding matrix.

22. The method according to any one of claims 15 to 21, wherein different TCIs are applied to all PUCCH resources in a PUCCH resource group where the PUCCHs are located.

23. The method according to claim 22, wherein:
the PUCCH resource is configured to not support repetition;
or,
the PUCCH resource is configured to support slot-based repetition;
or,
the PUCCH resource is configured to support sub-slot-based repetition.

24. The method according to any one of claims 15 to 23, wherein the PUCCH transmission comprises at least one of:
intra-slot frequency hopping transmission; or
inter-slot frequency hopping transmission.

25. The method according to claim 24, wherein:
the PUCCH resource is configured to perform the PUCCH transmission based on the SDM at each hop of intra-slot frequency hopping;
or,
the PUCCH resource is configured to perform the PUCCH transmission based on the SDM at each hop of inter-slot frequency hopping.

26. The method according to any one of claims 15 to 25, wherein the TCI comprises one of:
a joint TCI;
a separate TCI; or
spatial relationship information.

27. The method according to any one of claims 15 to 26, wherein,
indication information of the TCIs has a plurality of TCI fields;
wherein one TCI field indicates a TCI corresponding to one panel of the terminal.

28. The method according to any one of claims 15 to 26, wherein indication information of the TCIs has one TCI field; and
different codepoints of the TCI field indicate TCIs of the multi-panel of the terminal.

29. An apparatus for processing information, applied to a base station, comprising:
a sending module, configured to send a network signaling to a terminal, wherein the network signaling comprises beam indication information configured for a physical uplink control channel (PUCCH) resource indicated by a PUCCH resource indicator (PRI), the beam indication information comprises multiple transmission configuration indications (TCIs), and the beam indication information is used by the terminal to perform joint transmission for PUCCHs based on a spatial division multiplexing (SDM) mode of multi-panel or multi-transmission reception point (TRP).

30. The apparatus according to claim 29, wherein the multiple TCIs comprise a first TCI and a second TCI;
the first TCI is configured to indicate a transmission beam direction of a first panel of the terminal or a beam direction for PUCCH transmission towards a first TRP of the base station; and
the second TCI is configured to indicate a transmission beam direction of a second panel of the terminal or a beam direction for PUCCH transmission towards a second TRP of the base station.

31. The apparatus according to any one of claims 29 to 30, wherein demodulation reference signal (DMRS) ports associated with different TCIs are the same.

32. The apparatus according to any one of claims 29 to 31, wherein,
in a case that the terminal transmits same uplink control information (UCI) through PUCCHs of different panels, a same time-frequency resource is used.

33. The apparatus according to any one of claims 29 to 32, wherein the PUCCH transmission comprises: non-coherent joint transmission (NC-JT) for the PUCCHs, or coherent joint transmission (C-JT) for the PUCCHs.

34. The apparatus according to claim 33, wherein different panels of the terminal performing the NC-JT for the PUCCHs use different precoding matrices.

35. The apparatus according to claim 33, wherein different panels of the terminal performing C-JT of the PUCCH use the same precoding matrix.

36. The apparatus according to any one of claims 29 to 35, wherein different panels of the terminal performing the C-JT for the PUCCHs use a same precoding matrix.

37. The device of claim 36, wherein:
the PUCCH resource is configured to not support repetition;
or,
the PUCCH resource is configured to support slot-based repetition;
or,
the PUCCH resource is configured to support sub-slot-based repetition.

38. The apparatus according to any one of claims 29 to 37, wherein the PUCCH transmission comprises at least one of:
intra-slot frequency hopping transmission; or
inter-slot frequency hopping transmission.

39. The apparatus according to claim 38, wherein,
the PUCCH resource is configured to perform the PUCCH transmission based on the SDM at each hop of intra-slot frequency hopping;
or,
the PUCCH resource is configured to perform the PUCCH transmission based on the SDM at each hop of inter-slot frequency hopping.

40. The apparatus according to any one of claims 29 to 39, wherein the TCI comprises one of:
a joint TCI;
a separate TCI; or
spatial relationship information.

41. The apparatus according to any one of claims 29 to 40, wherein,
indication information of the TCIs has a plurality of TCI fields;
wherein one TCI field indicates a TCI corresponding to one panel of the terminal.

42. The apparatus according to any one of claims 29 to 40, wherein indication information of the TCIs has one TCI field; and
different codepoints of the TCI field indicate TCIs of the multi-panel of the terminal.

43. An apparatus for processing information, applied to a terminal, comprising:
a receiving module, configured to receive a network signaling sent by a base station, wherein the network signaling comprises beam indication information configured for a physical uplink control channel (PUCCH) resource indicated by a PUCCH resource indicator (PRI), the beam indication information comprises multiple transmission configuration indications (TCIs), and the beam indication information is used by the terminal to perform joint transmission for PUCCHs based on a spatial division multiplexing (SDM) mode of multi-panel or multi-transmission reception point (TRP).

44. The apparatus according to claim 43, wherein the multiple TCIs comprises a first TCI and a second TCI;
the first TCI is configured to indicate a transmission beam direction of a first panel of the terminal or a beam direction for PUCCH transmission towards a first TRP of the base station; and
the second TCI is configured to indicate a transmission beam direction of a second panel of the terminal or a beam direction for PUCCH transmission towards a second TRP of the base station.

45. The apparatus according to any one of claims 43 to 44, wherein demodulation reference signal (DMRS) ports associated with different TCIs are the same.

46. The apparatus according to any one of claims 43 to 45, wherein,
in a case that the terminal transmits same uplink control information (UCI) through PUCCHs of different panels, a same time-frequency resource is used.

47. The apparatus according to any one of claims 43 to 46, wherein the PUCCH transmission comprises: non-coherent joint transmission (NC-JT) for the PUCCHs, or coherent joint transmission (C-JT) for the PUCCHs.

48. The apparatus according to claim 47, wherein different panels of the terminal performing the NC-JT for the PUCCHs use different precoding matrices.

49. The apparatus according to claim 47, wherein different panels of the terminal performing C-JT of the PUCCH use the same precoding matrix.

50. The apparatus according to any one of claims 43 to 49, wherein different TCIs are applied to all PUCCH resources in a PUCCH resource group where the PUCCHs are located.

51. The apparatus according to any one of claims 43 to 50, wherein,
the PUCCH resource is configured to not support repetition;
or,
the PUCCH resource is configured to support slot-based repetition;
or,
the PUCCH resource is configured to support sub-slot-based repetition.

52. The apparatus according to any one of claims 43 to 51, wherein the PUCCH transmission comprises at least one of:
intra-slot frequency hopping transmission; or
inter-slot frequency hopping transmission.

53. The apparatus according to claim 52, wherein:
the PUCCH resource is configured to perform the PUCCH transmission based on the SDM at each hop of intra-slot frequency hopping;
or,
the PUCCH resource is configured to perform the PUCCH transmission based on the SDM at each hop of inter-slot frequency hopping.

54. The apparatus according to any one of claims 43 to 53, wherein the TCI comprises one of:
a joint TCI;
a separate TCI; or
spatial relationship information.

55. The apparatus according to any one of claims 43 to 54, wherein,
indication information of the TCIs has a plurality of TCI fields;
wherein one TCI field indicates a TCI corresponding to one panel of the terminal.

56. The apparatus according to any one of claims 43 to 54, wherein indication information of the TCIs has one TCI field; and
different codepoints of the TCI field indicate TCIs of the multi-panel of the terminal.

57. A base station, comprising a processor, a memory, and an executable program stored in the memory and capable of being run by the processor, wherein when the processor runs the executable program, it executes the method for processing information according to any one of claims 1 to 14.

58. A terminal, comprising a processor, a memory, and an executable program stored in the memory and capable of being run by the processor, wherein when the processor runs the executable program, it executes the method for processing information according to any one of claims 15 to 28.

59. A computer storage medium storing an executable program, wherein when the executable program is executed by a processor, the method for processing information according to any one of claims 1 to 14 or claims 15 to 28 is implemented.
